# EUROPEAN PATENT APPLICATION

(11) **EP 2 806 019 A1**
(43) Date of publication of application: **26.11.2014**
(21) Application number: 13169043.0
(22) Date of filing: 23.05.2013
(51) Int. Cl.: C12G 1/02, C12G 1/032

(54) **Improved fermentator**

(71) Applicant: Noform S.r.l., 30020 Meolo (VE) (IT)
(72) Inventor: Crosato, Remo, 30020 MEOLO (VE (IT)
(74) Representative: Citron, Massimiliano

(57) **Abstract**

To improve fermentation efficiency and quality, a fermenter (MC) is described for a crushed vegetal product (M) comprising a fermentation tank (40; 340) for the crushed product; an auxiliary volume (60; 360) for receiving a liquid part of the crushed product contained in the fermentation tank; and a pumping-over duct (72) which makes the auxiliary volume communicate with the upper part of the fermentation tank to pump over the liquid part. There are also provided means (80, 82, 52, 200, 230) for injecting into the auxiliary volume a gas under pressure.

## Description

The invention relates to an improved fermenter, in particular a fermenter for must chosen here as an example.

Winemakers are known wherein during fermentation the must is pumped-over, i.e. moved in an auxiliary tank and from there pumped over the marc cap.

EP 1134778 describes an auxiliary pumping-over tank 14 having (i) a probe 25 for the level of the must, and (ii) a conduit 20 and a valve 16 for degassing it. The must fills up the tank 14, making the present air escape through the valve 16 as long as the probe 25 detects a maximum level. This system inherently has the problem that if the probe 25 or the valves 7, 22 were to malfunction, plausible hypothesis with aging or mechanical stress, the must would flood the winemaking factory. Therefore, the maintenance must be periodical, affects the operating costs and slows down the production.

The pumping-over is done by exploiting the fermentation gases emitted in the tank 14, especially CO₂. For young wine-makings or in cold environments, especially at the beginning of fermentation, there is not enough CO₂ generation and the pumping-over is precluded.

EP 1964914 describes an auxiliary pumping-over tank 2 equipped with (i) a probe 15 for the maximum level of the must, and (ii) a conduit 11 and a valve 13 to insert and emit gas. The must fills up the tank 2, making the present air leave from the duct 11 as long as the sensor 15 detects a maximum level. The pumping-over occurs then by a pump 17, during which gas enters from the duct 11 into the tank 2, and eventually the tank 2 is degassed through the duct 11. This system too has drawbacks. Not only the probe 15 increases the complexity and cost thereof, but if it were to malfunction, the must could flood the winemaking factory (the probes are usually not watertight). In addition, a failure or occlusion of the valve 13 at the time of pumping-over would lead to the implosion of the tank 2 or to undue stress for the pump 17. Still the maintenance must be periodic, affects the operating costs and slows down the production.

Also, since the pumping-over is done by the pump 17, the must undergoes mechanical stress and over-heating that ruin its quality. Furthermore, the pump 17 is an expensive item and requires a lot of energy.

Providing an improved fermenter, in order to solve one of these problems in particular the excessive complexity and/or the high risks of leakage of the must from the auxiliary tank, is the main object of what is defined in claim 1.

A fermenter is proposed for a crushed vegetal product (e.g. having liquid and peel like grape must) comprising:
- a fermentation tank for the crushed product, e.g. wherein the must can generate a floating cap;
- an auxiliary volume for receiving a liquid part of the crushed product contained in the fermentation tank (preferably a filter is used to separate the liquid part from the peel during pumping-over);
- a pumping-over duct which makes the auxiliary volume communicate with the upper part of the fermentation tank to pump over the liquid part.

The fermenter comprises means for injecting gas under pressure into the auxiliary volume, e.g. into the upper part thereof and preferably only through a unidirectional inlet.

Said means for injecting preferably comprise an inlet for gas under pressure placed in the upper part of the auxiliary volume, over the surface of the liquid contained therein.

The gas therefore presses on the surface of the liquid without gurgling, bubbles formation inside the conduit, or dispersions. The gas under pressure is then is exploited to eject the liquid from the auxiliary volume into the pumping-over duct, up to the top of the fermentation tank.

Said inlet is preferably only for gas and unidirectional, and more particularly it can be the only fluid communication being or flowing into the upper part of said volume. This prevents gas backflows and overflows, above all of liquid. In this way one can avoid probes or level controllers because either at most the liquid completely fills the auxiliary volume, or it remains below a level defined by a bubble of gas remaining in the upper part of the auxiliary volume. In every case, it can be arranged that there are no possible escape paths for the liquid except through the pumping-over duct, and the structure of the fermenter is thus greatly simplified and made more secure.

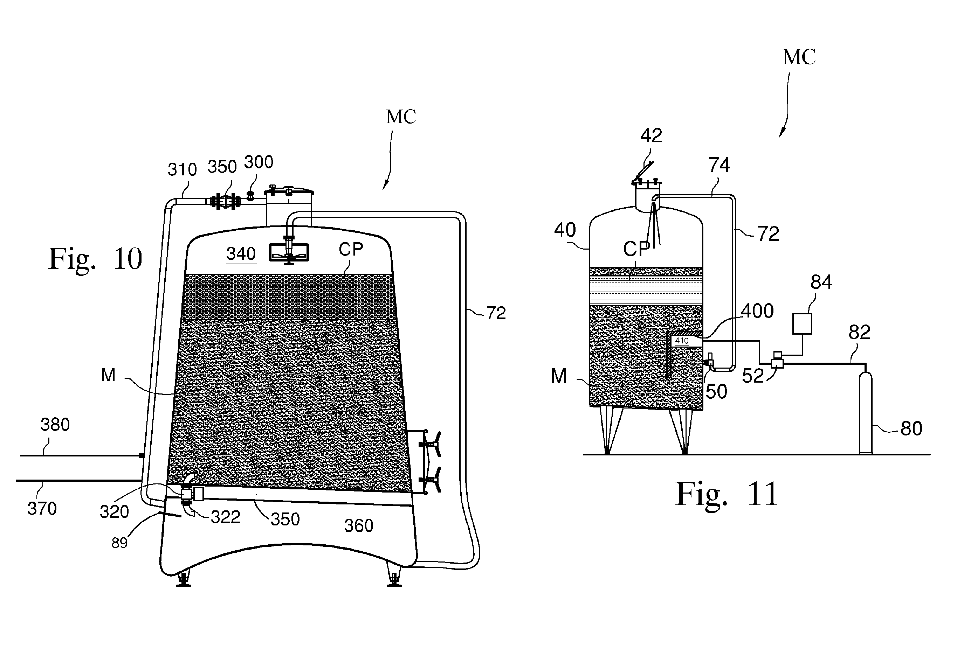

Said means for injecting allow to do without pumps, and if they are connected or connectable to a source or reserve or stored external accumulation of gas under pressure, the pumping-over can be run regardless of the fermentation conditions. The source or reserve of gas under pressure, to which said inlet and/or said means for injecting can be connected, can be e.g.
- autonomous and/or external to the fermentation tank, e.g. a cylinder, or another separate storage tank, or
- an accumulation of fermentation gas stored in a cell or tank, e.g.
   inside or comprised in the fermentation tank, e.g. formed by a wall of the fermentation tank and by a baffle 400 which extends from it, as in fig. 11 (e.g. being or forming a sort of bell or container with open bottom, or an upside-down glass, beneath which there is formed a bubble or accumulation of injected gas 410 to use as a driving force to push the must into the duct 72).

Said auxiliary volume preferably has inlets and outlets for the liquid part only in its lower part. Thus the capacity of the volume is exploited at most and a bigger pocket of injected gas under pressure can be formed.

The activities of the fermenter can be made automatic and programmable, for maximum efficiency and repeatability of results. To this aim, the fermenter can comprise an automatic controller, e.g. a PLC, a computer or a microprocessor circuit, that drives and manages e.g. said means for injecting, actuators, valves, displays, alarms, or the timings during the work cycles.

In particular, the automatic controller may be adapted to perform the following optional steps:
(i) opening and closing in timed manner a valve between the fermentation tank and the auxiliary volume, to inject crushed material to be pumped-over into the fermentation tank;
(ii) timing the introduction of gas under pressure in the auxiliary volume (e.g. moment and/or duration of introduction);
(iii) receiving programming commands for the operation of the fermenter by the user, e.g. through a keyboard;
(iv) reading the output signals of sensors or probes.

The step (i) automates the feeding of liquid into the auxiliary volume, the step (ii) automates the operation of the actual pumping-over. The controlled succession of phases (i) and (ii) allows to program and fully automate the pumping-over. In particular, the controller can allow to program the moments in which the phases (i) and (ii) occur, their durations, dead times of waiting, etc.

In some cases, the type and/or pressure and/or volume of gas injected into the auxiliary volume can determine differences in the fermentation. These variables are advantageously monitored by sensors in the auxiliary volume, preferably interfaced and monitored by the controller (see operation iv above).

For greater safety the pumping-over duct can be equipped with a valve, preferably controlled by the controller, so as to avoid unexpected pumping-over flows.

As preferred values, uncombined as well, which have given the best results for pumping-over (e.g. maximum transfer of must in the fermentation tank and minimum residual in the auxiliary volume or the pumping-over duct):
- diameter of the fermentation tank = 150-500 cm;
- capacity of the fermentation tank = 40-1000 hl;
- diameter of the auxiliary volume = 300-1500 mm;
- capacity of the auxiliary volume = 50-1000 1;
- diameter of the pumping-over conduit = 40-100 mm.

The pumping-over duct is preferably formed by a substantially vertical portion, which is connected to the bottom of the auxiliary volume (e.g. by a U-shaped portion), and a substantially horizontal portion which is inserted in a fermentation tank (see figures).

When the gas injected in the volume has enough pressure to win the hydrostatic head inside the pumping-over duct, the outflow of liquid from the auxiliary volume begins. The head increases as the level of liquid grows in the duct, and consequently the downstream pressure of the gas. There is then a sudden effect of release when the level of liquid arrives at the horizontal portion, given that the head does not increase anymore. The growing pressure of the gas and the inertia of the liquid then allow emptying the pumping-over conduit.

It has been experimentally seen that the auxiliary volume is preferred to rather be at least equal to five times the inside volume of the pumping-over duct or of its vertical portion, to allow the complete emptying of the conduit in the final phase of the pressurized emptying during the pumping-over.

It also proposes a method of pumping-over for a crushed vegetal product having all the advantages described for the fermenter. In particular the method comprises the steps of
- putting in a fermentation tank crushed vegetal product;
- moving in an auxiliary volume a liquid part of the crushed vegetal product contained in the fermentation tank;
- isolating the auxiliary volume from the fermentation tank;
- injecting gas in the auxiliary volume to eject the liquid part along a pumping-over duct which connects the auxiliary volume with the upper part of the fermentation tank.

In general, any characteristic of the fermenter as described above can be part or phase of the method. In particular, the method can comprise as a variants the optional phases of:
- injecting the gas in the upper part of the auxiliary volume (to maximize, as in a plunger, the mass of underlying liquid to be pumped-over), preferably through a unidirectional inlet for gas under pressure (to avoid re-flows of gas or liquid); or
- moving the liquid part by (the principle of) communicating vessels;
- letting the liquid part enter and come out only into or from the lower part of the auxiliary volume.

The advantages of the invention will be more apparent from the following description of a preferred embodiment, making reference to the attached drawing in which
- Figures 1-4 show front views of the improved fermenter in successive operating phases,
- Figure 5-11 show front views of variants of the improved fermenter.

In the description and in the drawings equal references indicate equal parts.

The fermenter MC, e.g. a winemaker, comprises a fermentation tank 40, having an upper manhole 42. In the tank 40 must M is storable to ferment, which generates a cap CP of floating marc.

The bottom of the tank 40 communicates, via a conduit 44 equipped with valve 50, with an external tank or pumping-over tank 60, whose bottom connects with a rising duct 70 that reaches the ceiling of the tank 40, e.g. at the height of the manhole 42. The duct 70 is formed by a vertical portion 72 and a horizontal portion 74, which enters and flows into the tank 40.

To the ceiling or roof of the tank 60 arrives a conduit 82 connected with an external source or reservoir of gas under pressure 80, e.g. a cylinder. On the duct 82 there is a(n) (electro)valve 52 to adjust the gas flow, and the valve 52 is controlled by an electronic controller 84. In the following the actions performed by the various components must be understood as driven and/or programmed by the controller 84.

### OPERATION

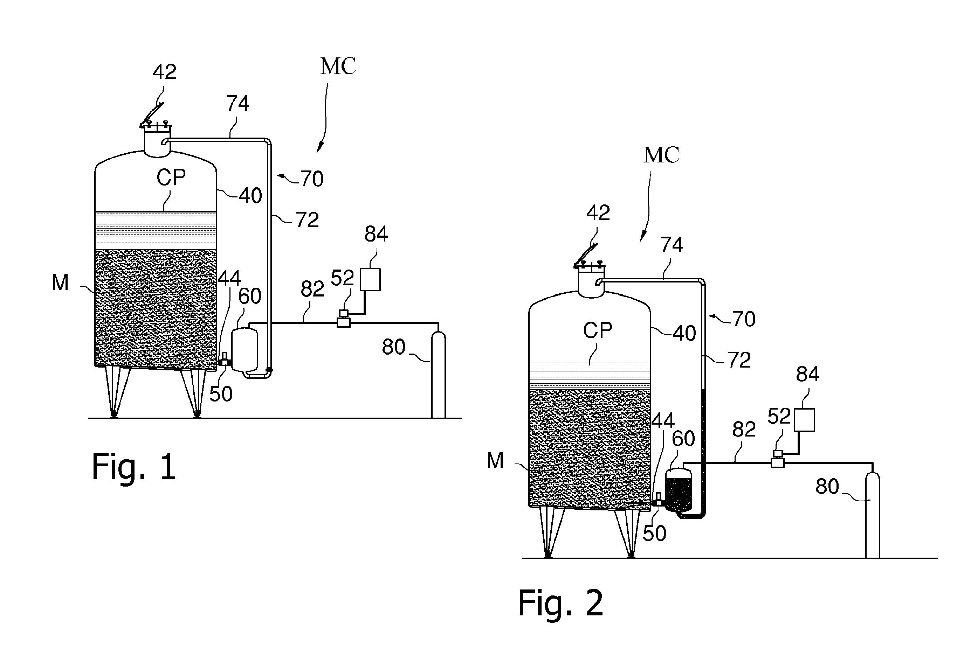

PHASE 1 (fig. 1): the tank 40 is filled in known manner with crushed vegetable material, and e.g. left open by the open manhole 42. The valve 50 is closed, therefore the pumping-over tank 60 is empty and at atmospheric pressure equal to 0 bar.

PHASE 2 (fig. 2): pumping-over begins. The valve 50 gets opened and the pumping-over tank 60 fills up compressing the gas present therein up to a pressure equal to the hydrostatic head, the pumping-over duct 70 is open and is filled up until the level of must M in the tank 40 is reached (the principle of communicating vessels).

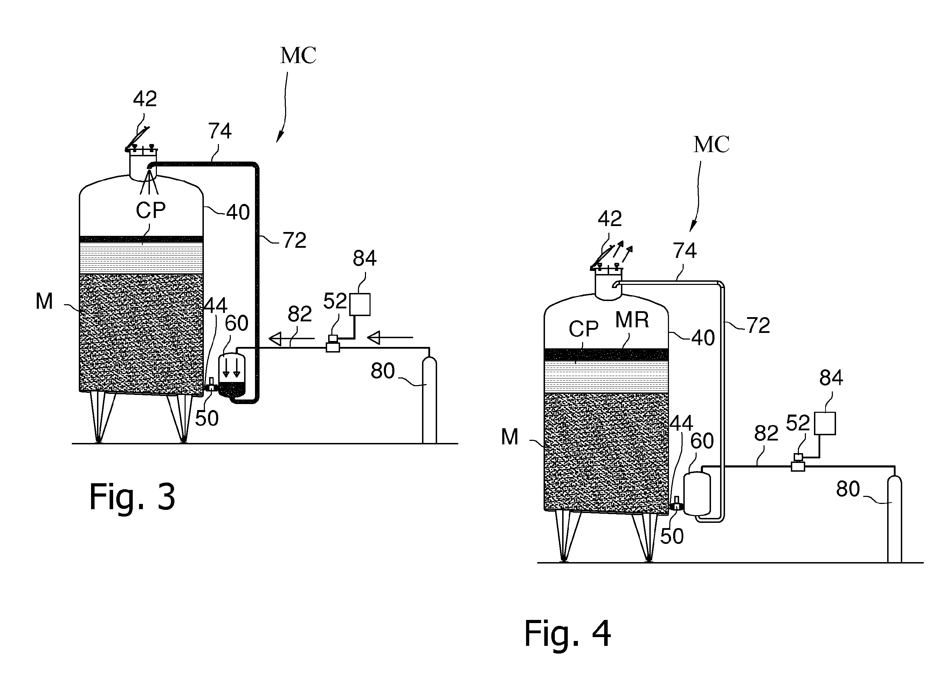

PHASE 3 (fig. 3): After a time T1 (programmable with the controller 84) necessary to ensure the tank 60 and the pumping-over duct being filled up to level, the valve 50 is closed and the valve 52 opens with injection of gas in the tank 60. The gas is entered (see arrows) at a pressure greater than the hydrostatic head and for a time T2 (programmable by controller 84). Initially the liquid rises slowly along the duct 72. When the liquid reaches the portion 74 the backpressure of the column of liquid in the duct 72 no longer increases, and the thrust of the gas upstream very quickly leads to emptying of the tank 60 and the pumping-over duct 70. Note that the tank 60, in the final phase of the emptying by gas under pressure, acts as an actual pump that allows the complete emptying of the pumping-over duct 70 into the tank 40 (see layer MR in fig. 4).

PHASE 4 (fig. 4): The pumping-over tank 60 returns to the pressure present in the tank 40 (atmospheric pressure of 0 bar). The gas under pressure in the tank 60 can exit from the manhole 42 opened (see arrows) or by an overpressure valve (not shown), e.g. to be recovered and fed back into the source or reservoir 80. A new cycle of pumping-over can begin again, which will be repeated n times, according to the quantity of must that is to be pumped-over. The amount of must loaded in the tank 60 can be approximately determined (e.g. ± 10%) by knowing the quantity of must present in the tank 40 and therefore the hydrostatic pressure in the same.

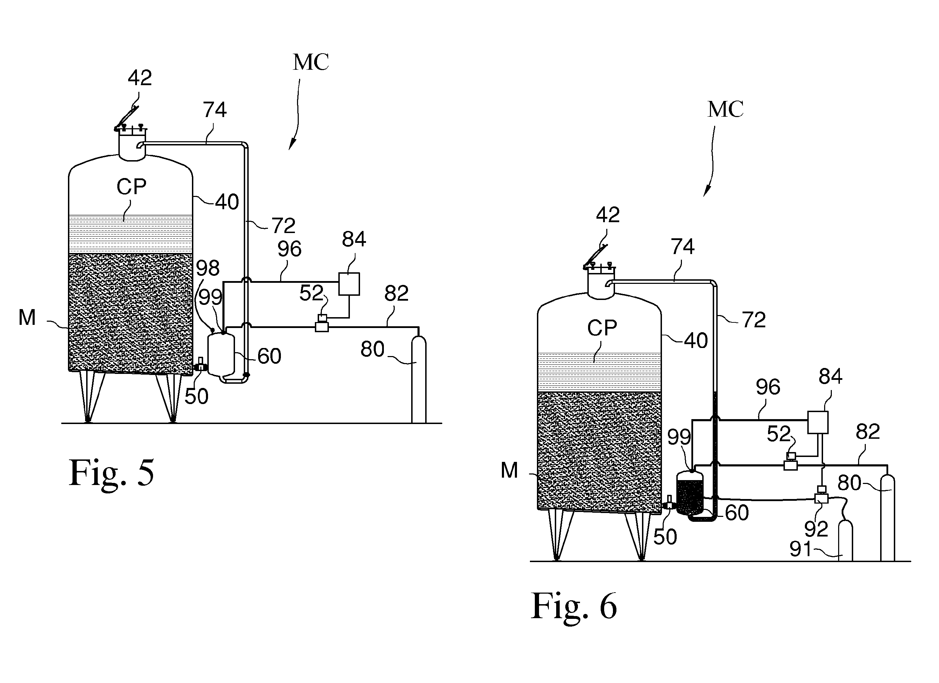

For greater accuracy detection devices may be introduced, as in fig. 5. In fact, greater accuracy can be achieved by placing a pressure-gauge 98 on the ceiling of the tank 60. By manual reading or by reading the pressure one can calculate the amount of must in the same tank 60 (e.g. with ± 5% precision). Even greater precision can be achieved through the use of a pressure transducer or sensor 99, which senses the pressure in the tank 60. The transducer, connected to the controller 84 by an electrical connection 96, allows calculating and programming the quantity of pumped-over must.

Another variant (fig. 6) provides for the addition of an injector or valve 92 which injects gas in the lower part, immersed in use, of the tank 60. The injector is controlled by the controller 84 and draws from a source or reserve of oxygen (or other food gas), such as a cylinder 91. One is thus able to macro-oxygenate exactly the quantity of must that is introduced into the tank 60 at each cycle. Through the transducer 99 one can know exactly the amount of must in the tank 60 and therefore the controller 84 can control via software the injector 92 to inject a proper amount of oxygen in the must M for a perfect macro/micro-oxygenation.

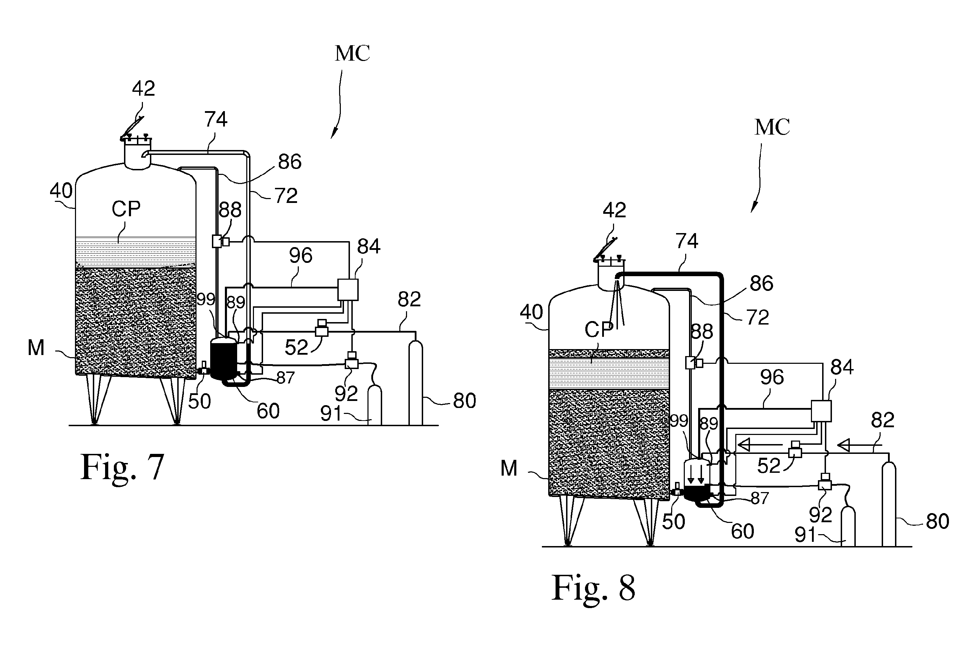

Another variant (figures. 7-8) includes the addition of a second pressure transducer or sensor 87 in the bottom of the tank 60,
a level probe 89 in the upper part of the tank 60, and
a duct 86 for direct interconnection between the ceiling of the tank 60 and the ceiling of the tank 40.

The duct 86 has adjustable flow through a valve 88 controlled by the controller 84. By allowing venting of the tank 60, it allows to perform a perfect measure of the quantity of must M that enters the tank 60, and consequently a perfect macro-oxygenation. Another advantage is that by the duct 86 one is unable to define the density of the must that will hang over the pressure transducer 87, and thus the accuracy of detection is improved.

This variant can function as follows.

PHASE 1: the valves 50, 88 are opened and the pressure in the tank 60 equals the atmospheric pressure. Then the must M enters the tank 60 up to the level of the probe 89, at which the valves 50, 88 are closed. The density of the must in the tank 60 can be detected (in particular by measuring the sugar content) and the macro/micro-oxygenation through the injector 92 can be accomplished. Also a perfect measure of the quantity of must present in the tank 60 and the pumping-over pipe 72 can be obtained.

PHASE 2: the valves 50, 80 stay closed, and the valve 52 is opened to pressurize the tank 60 with the gas selected from the source or reserve 80. When the tank 60 is emptied as already described the cycle can start as many times as are the liters of must that are desired to be pumped-over.

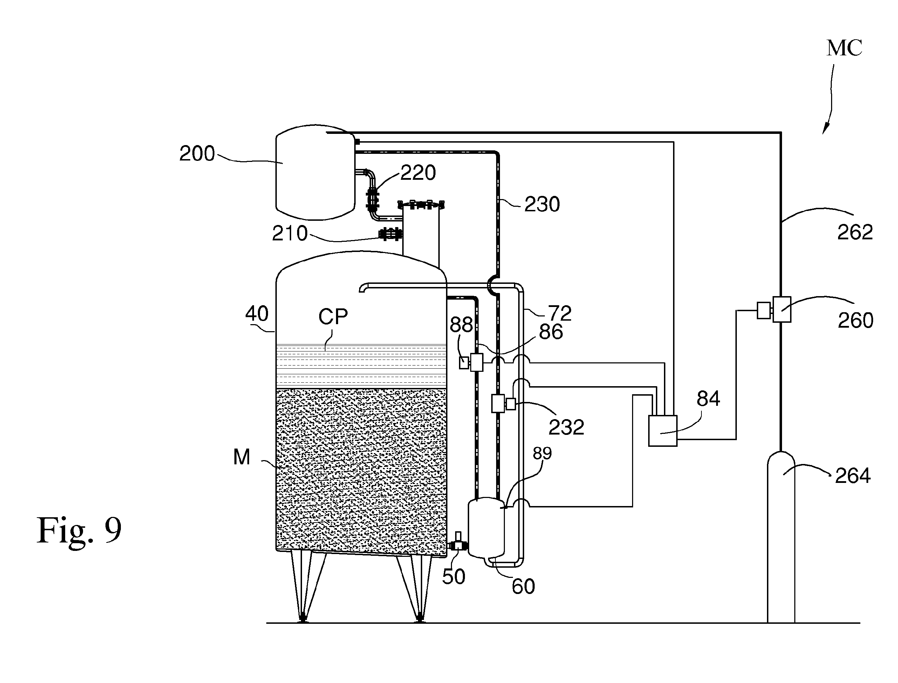

Another variant (fig. 9) provides for the application of the pumping-over tank 60 to the wine-making tank 40 by using a cell or tank 200 of gas accumulation (pressurized by external gas or fermentation gas) as a pumping means to pressurize the tank 60 filled with must. Thanks to and during the alcoholic fermentation both tanks 200, 40 will be pressurized, by closing the manhole 42 and leaving closed a vent valve 210 thereof, while a valve 220, placed on a duct which makes the tank 40 and the tank 200 communicate, remains open. Then the two tanks 200, 40 are isolated through the closing of the valve 220 and the tank 40 is degassed by opening the valve 210. At this point the tank 200 will be pressurized while the tank 40 is at atmospheric pressure of 0 bar: one can therefore use the tank 200 as a pressurizing pump for the tank 60 by sending to it gas under pressure via a conduit 230 provided with a valve 232 (controlled by the controller 84).

The controller 84 holds the valve 50 open until the tank 60 is filled to the level established by the level sensor 89. Reached the maximum level of the must in the tank 60, the valves 50 and 88 are closed and the valve 232 opens and the pumping-over of must is performed by the gas contained in the reservoir 200.

The controller 84 can control the replenishing of pressure of tank 200 with another external gas (for example via insufflation from a conduit 262 which is connected to a cylinder or source or reserve 264 of stored gas, by opening a valve 260).

Another variant (fig. 10) provides that the must pumping-over tank 360 be integrated into the fermenter MC and placed below the vinification cell or tank 340. In particular, a containing casing is internally partitioned by a substantially vertical baffle 350 into the two sub-volumes or cells indicated with 340, 360.

The frustoconical shape of the vinification cell 340, for each time the pumping-over tank 360 is filled up, allows lowering the marc cap CP, therefore tearing it, and then compact it in the following pumping-over phase of the must. The controller 84 (not shown) always adjusts each element.

PHASE 1: The wine-making cell 340 is filled with crushed material M and a marc cap CP is formed. The cell 360 is empty. Both cells 340, 360 are at atmospheric pressure. A valve 300, placed on an isobaric interconnection pipe 310 between the two cells 340, 360, is opened. The two cells 340, 360 are put into communication with each other by both the pumping-over duct 72 and the pipe 310.

A valve 320 opens in a connection 322 for draining must placed between the two cells 340, 360 and the cell 360 is filled with must until the level set by a level probe 89 is reached. Consequently the cap CP lowers and widens.

PHASE 2: valve 322 and a valve 350 in the conduit 310 close. The cell 360 is pressurized with external gas through a gas inlet 370. This determines the pumping-over of the must into the cell 360 through the duct 72. When the cell 360 is completely emptied, the gas under pressure will come out of the pumping-over duct 72 and of the cell 340 through the open valve 300. Both cells 340, 360 are now at atmospheric pressure (0 bar). A new pumping-over cycle can then be started again.

On the tube 310 can be present a pressure probe 380 for controlling the gas pressure of the cells 340, 360, and ultimately that of the gas executing the pumping-over.

## Claims

1. Fermenter (MC) for a crushed vegetal product (M) comprising:
- a fermentation tank (40; 340) for the crushed product;
- an auxiliary volume (60; 360) for receiving a liquid part of the crushed product contained in the fermentation tank;
- a pumping-over duct (72) which makes the auxiliary volume communicate with the upper part of the fermentation tank to pump over the liquid part;
**characterized in that** it comprises means (80, 82, 52, 200, 230) for injecting into the auxiliary volume a gas under pressure.

2. Fermenter according to claim 1, wherein the means for injecting comprise a unidirectional inlet of gas under pressure that is placed in the upper part of the auxiliary volume and is connected to a source or reserve of gas under pressure (80).

3. Fermenter according to claim 1 or 2, wherein the source or reserve of gas under pressure is external to the fermentation tank.

4. Fermenter according to claim 1 or 2 or 3, wherein the auxiliary volume has inlets and outlets for the liquid part only in its lower part.

5. Fermenter according to any one of the preceding claims, wherein the auxiliary volume comprises a tank external to the fermentation tank.

6. Fermenter according to any one of the preceding claims 1 to 4, wherein the auxiliary volume is placed inside the fermentation tank and is formed by an internal partition of it.

7. Fermenter according to any one of the preceding claims, comprising an automatic controller (84) adapted to time the injection of gas under pressure in the auxiliary volume.

8. Fermenter according to any one of the preceding claims, comprising an automatic controller (84) adapted to open in timed manner (50) a valve (50) between the fermentation tank and the auxiliary volume to insert a liquid part to pump-over into the former.

9. Fermenter according to any one of the preceding claims, comprising an automatic controller (84) adapted to time the injection of gas into the auxiliary volume.

10. Fermenter according to any one of the preceding claims, wherein the pumping-over duct (72) comprises a substantially vertical portion, which is connected to the bottom of the auxiliary volume, and a substantially horizontal portion which is inserted in the fermentation tank.

11. Fermenter according to any one of the preceding claims, wherein the auxiliary volume is at least equal to five times the inside volume of the pumping-over duct or of its vertical portion.

12. Pumping-over method for a crushed vegetal product (M), comprising the steps of
putting in a fermentation tank (40; 340) crushed vegetal product (M);
- moving in an auxiliary volume (60, 360) a liquid part of the crushed vegetal product contained in the fermentation tank;
- isolating the auxiliary volume from the fermentation tank;
- injecting gas in the auxiliary volume to eject the liquid part along a pumping-over duct (72) which connects the auxiliary volume with the upper part of the fermentation tank.

13. Method according to claim 12, comprising the step of injecting the gas in the upper part of the auxiliary volume..

14. Method according to claim 12 or 13, comprising the step of injecting the gas in the upper part of the auxiliary volume through a unidirectional inlet for gas under pressure.

15. Method according to claim 12 or 13 or 14, comprising the step of letting the liquid part enter and come out only into or from the lower part of the auxiliary volume.
